# EUROPEAN PATENT APPLICATION

(11) **EP 1 898 650 A2**
(43) Date of publication of application: **12.03.2008**
(21) Application number: 07113802.8
(22) Date of filing: 03.08.2007
(51) Int. Cl.: H04N 9/68

(54) **Image processing apparatus, display apparatus comprising image processing apparatus and image processing method**

(30) Priority: 07.09.2006 KR 20060086023
(71) Applicant: Samsung Electronics Co., Ltd, Suwon-si, Gyeonggi-do 443-742 (KR)
(72) Inventor: Janag, Sung-hwan Jeongdeunmaeul Hanjin Apt. 704-1302,, Seongnam-si, Gyeonggi-do (KR)
(74) Representative: Grootscholten, Johannes A.M.

(57) **Abstract**

An image processing apparatus includes a color extracting part that receives an image signal and extracts a color signal from the received image signal; and a converting part that detects a saturation of a pixel of the color signal, determines whether the saturation of the pixel is higher or lower than a reference saturation, increases the saturation of the pixel based on a conversion function if the saturation of the pixel is higher than the reference saturation, and decreases the saturation of the pixel based on the conversion function if the saturation of the pixel is lower than the reference saturation.

## Description

### BACKGROUND OF THE INVENTION

### Field of the Invention

Apparatuses and methods consistent with the present invention relate to image processing, and more particularly, to image processing which is capable of correcting a color image signal.

### Description of the Related Art

In general, a display apparatus, such as a computer monitor or a TV, receives a broadcasting signal from a broadcasting station or an image signal from an external image signal source, such as a video tape recorder (VTR), a digital versatile disk (DVD) player or the like, and displays an image based on the received broadcasting signal or image signal.

An image signal has various forms of formats such as a composite signal, a S-video signal (or Y/C signal), a component signal and the like.

Among these signals, the component signal, which is widely used to output an image signal with high image quality, is divided into a luminance signal (Y signal) and two color difference signals (R-Y and B-Y, or Cb and Cr, or Pb and Pr).

On the other hand, when an analog component signal is input to a display apparatus, an A/D converter provided in the display apparatus converts the input analog component signal into a digital image signal for display of an image.

A related art image processing apparatus separates an image signal into a Y (luminance) signal and a C (color) signal and performs a noise reduction operation to reduce noises included in each of the Y signal and the C signal.

When noises of the color signal are collectively removed irrespective of saturation of the color signal or noises included in the luminance signal are removed, or when the image signal is converted into a digital signal to be output to a display apparatus, a signal having low gradation has undesired noises while the signal is generated and processed, which results in distortion of color characteristics.

In particular, if a user increases a color component of the image signal, noise with low gradation also increases with the color component, which results in distortion of a color characteristic of a color signal with low gradation.

### SUMMARY OF THE INVENTION

Accordingly, it is an aspect of the present invention to provide an image processing apparatus which is capable of decreasing noises included in a color signal having low gradation, and increasing saturation of a color signal having high gradation by decreasing low saturation of the color signal and increasing high saturation of the color signal, a display apparatus comprising the image processing apparatus and an image processing method.

The foregoing and/or other aspects of the present invention can be achieved by providing an image processing apparatus comprising: a color extracting part that receives an image signal and extracts a color signal from the received image signal; and a converting part that detects a saturation of a pixel of the color signal, determines whether the saturation of the pixel is higher or lower than a reference saturation, increases the saturation of the pixel based on a conversion function if the saturation of the pixel is higher than the reference saturation, and decreases the saturation of the pixel based on the conversion function if the saturation of the pixel is lower than the reference saturation.

The conversion function may add a specified value to the detected saturation of the pixel or subtracts a specified value from the detected saturation of the pixel.

The foregoing and/or other aspects of the present invention can be also achieved by providing a display apparatus that processes an image signal and displays an image on a display part, comprising: an image processing apparatus that extracts a color signal from the image signal and detects a saturation of a pixel of the color signal, determines whether the saturation of the pixel is higher or lower than a reference saturation, increases the saturation of the pixel based on a conversion function if the saturation of the pixel is higher than the reference saturation, and decreases the saturation of the pixel based on the conversion function if the saturation of the pixel is lower than the reference saturation; a signal processing part; and a controller that controls the signal processing part to process and display the image signal.

The conversion function may add a specified value to the detected saturation of the pixel or subtracts a specified value from the detected saturation of the pixel.

The display apparatus may further comprise a storing part in which one or more conversion functions are stored.

The controller may control the signal processing part to generate a selection screen, which allows a user to select one of the conversion functions stored in the storing part, and display the generated selection screen on a separate display part.

The controller may control the signal processing part to generate a setup screen, which allows a user to set a conversion function reference saturation, set the minimum value and the maximum value of the conversion function, which correspond to the minimum input saturation value to be decreased if the minimum input saturation value is lower than the set conversion function reference saturation and the maximum input saturation value to be increased if the maximum input saturation is higher than the set conversion function reference saturation, respectively, and display the generated setup screen on the display part.

The controller may control the signal processing part to generate a setup screen, which allows a user to select the reference saturation of the conversion function, and display the generated setup screen on the display part.

The foregoing and/or other aspects of the present invention can be also achieved by providing an image processing method comprising: receiving an image signal and extracting a color signal from the received image signal; detecting a saturation for a pixel of the color signal; determining whether the saturation of the pixel is higher or lower than a reference saturation; and varying the saturation of the pixel if the saturation is higher or lower than the reference saturation based on a conversion function.

The varying the saturation of the pixel may comprise increasing the saturation of the pixel based on the conversion function if the saturation of the pixel is higher than the reference saturation, and decreasing the saturation of the pixel based on the conversion function if the saturation of the pixel is lower than the reference saturation.

The conversion function may add a specified value to the detected saturation of the pixel or subtracts a specified value from the detected saturation of the pixel.

### BRIEF DESCRIPTION OF THE DRAWINGS

The above and/or other aspects of the present invention will become apparent and more readily appreciated from the following description of the exemplary embodiments, taken in conjunction with the accompanying drawings of which:
FIG. 1 is a control block diagram of an image processing apparatus according to an exemplary embodiment of the present invention;
FIG. 2 is a control block diagram of a display apparatus according to an exemplary embodiment of the present invention;
FIG. 3A is an exemplary view showing a conversion function according to an exemplary embodiment of the present invention;
FIG. 3B is an exemplary view showing the maximum value and the minimum value of the conversion function according to the exemplary embodiment of the present invention;
FIG. 4 is an exemplary view showing a setup screen according to an exemplary embodiment of the present invention;
FIG. 5 is a flow chart illustrating an image processing method according to an exemplary embodiment of the present invention; and
FIG. 6 is a flow chart illustrating an image processing method of the display apparatus according to the exemplary embodiment of the present invention.

### DETAILED DESCRIPTION OF THE EXEMPLARY EMBODIMENTS OF THE INVENTION

Reference will now be made in detail to exemplary embodiments of the present invention, examples of which are illustrated in the accompanying drawings.

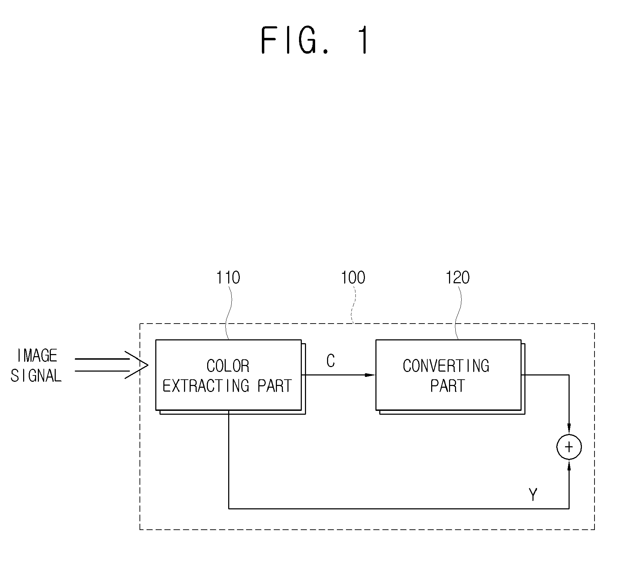

As shown in FIG. 1, an image processing apparatus 100 according to an exemplary embodiment of the invention comprises a color extracting part 110 and a converting part 120.

The color extracting part 110 extracts a color signal from an input image signal. Here, the input image signal may comprise an S-signal (or Y/C signal) including a color (C) signal and a luminance (Y) signal, and a component signal.

In this exemplary embodiment, in the image processing apparatus 100, the color extracting part 110 extracts only the color signal from the image signal including the color signal and the luminance signal and applies the extracted color signal to the converting part 120, which will be described later.

The converting part 120 determines saturation of the color signal extracted from the color extracting part 110 and corrects the determined saturation based on a preset conversion function.

Here, the saturation represents depth of color for each pixel in the color signal included in the image signal. In this exemplary embodiment, the converting part 120 of the image processing apparatus 100 increases the saturation to improve image quality of the image signal.

The conversion function used herein represents corrected saturation for each pixel of the color signal for improvement of image quality.

In this exemplary embodiment, based on a predetermined conversion function stored in the converting part 120, the converting part 120 compares original saturation for each pixel of the color signal with reference saturation to determine whether the original saturation is low or high, subtracts a predetermined value from the original saturation if the original saturation is low, and adds a predetermined value to the original saturation if the original saturation is high.

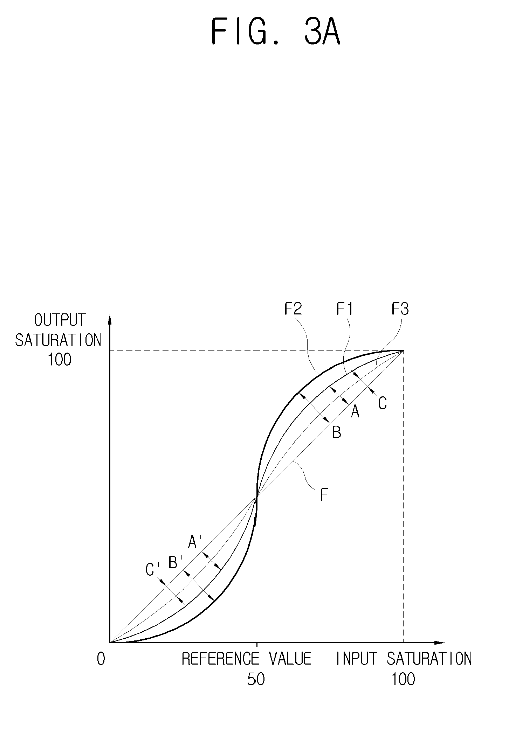

In this exemplary embodiment, the converting part 120 corrects an input saturation based on one of F1, F2 and F3 conversion functions as shown in FIG. 3A.

Specifically, for example, for an F function for outputting a saturation having the same level as an input saturation, the F1 conversion function decreases an input saturation, which is less than a reference saturation of 50, by A' and increases an input saturation, which is more than the reference saturation of 50, by A.

In this exemplary embodiment, for an RGB color of 255, the reference saturation of 50 may be set to be 128 which is a midst value between 0 and 255. Accordingly, the converting part 120 corrects the saturation by decreasing an input saturation, which is less than 128, by A' based on the F1 conversion function. On the other hand, the converting part 120 corrects the saturation by increasing an input saturation, which is more than 128, by A based on the F1 conversion function.

Although it is illustrated with a conversion function such as the F1 conversion function in this exemplary embodiment, the saturation may be corrected using a table in which output saturations are set in correspondence to input saturations.

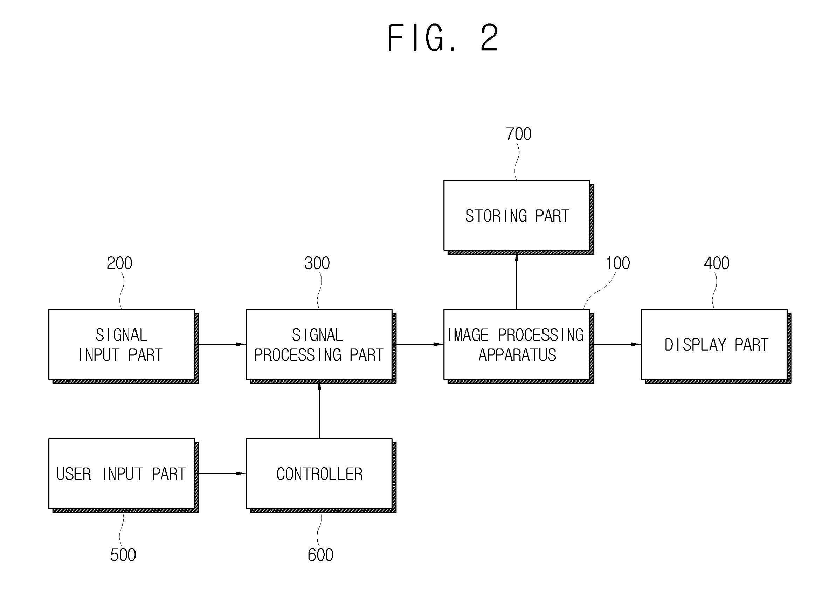

FIG. 2 is a control block diagram of a display apparatus according to an exemplary embodiment of the present invention.

As shown in FIG. 2, a display apparatus according to an exemplary embodiment of the present invention comprises an image processing apparatus 100, a signal processing part 300, a display part 400 and a controller 600 that controls these components.

The image processing apparatus 100 corrects an image signal input through a signal input part 200, as described above. In this exemplary embodiment, the signal input part 200 may comprise a decoder that decodes an image signal input externally.

The signal processing part 300 may comprise a scaler that adjusts brightness, resolution and the like of an image signal input through the signal input part 200. In this exemplary embodiment, the signal processing part 300 is illustrated with a scaler that processes an image signal decoded in the signal input part 200. In this exemplary embodiment, the scaler processes brightness, resolution and the like of the input image signal and outputs a result of the process to the display part 400.

On the other hand, the decoded image signal may be changed in its saturation in the image processing apparatus 100, and then, the image signal with the changed saturation may be applied to the signal processing part 300.

The display part 400 may comprise any one of a liquid crystal display (LCD) module, a plasma display panel (PDP) module, an electro luminescence (EL), and other display modules which are capable of displaying an image based on an image signal output from the image processing apparatus 100.

In this exemplary embodiment, the display apparatus may further comprise a storing part 700.

Conversion functions by use of which the image processing apparatus 100 corrects saturation of an image signal are stored in the storing part 700. In this exemplary embodiment, conversion functions preset during manufacture of the display apparatus or a plurality of conversion functions that produce different saturation correction values may be stored in the storing part 700.

For example, as shown in FIG. 3A, different conversion functions F1, F2 and F3 having respective conversion widths A and A', B and B', and C and C' may be stored in the storing part 700.

Among these conversion functions, the F1 conversion function is a function to correct the saturation of a pixel by increasing a saturation, which is more than a reference saturation, by A, and decreasing a saturation, which is less than the reference saturation, by A'.

The F2 conversion function is a function to correct the saturation of a pixel by increasing a saturation, which is more than the reference saturation, by B, and decreasing a saturation, which is less than the reference saturation, by B'. The F3 conversion function is a function to correct the saturation by increasing a saturation, which is more than a reference saturation, by C, and decreasing a saturation, which is less than the reference saturation, by C'.

In this exemplary embodiment, a user may select one of the F1, F2 and F3 conversion functions through a user input part 500.

In this case, the controller 600 controls the signal processing part 300 to generate a selection screen, which allows the user to select one of the conversion functions, and display the selection screen on the display part 400. The selection screen may have a graphical shape shown in FIG. 3A or a diagram shape indicated with saturation conversion ratios of A-A', B-B' and C-C' of the conversion functions.

In this case, when the user selects one of the conversion functions through the user input part 500 such as a button provided in the display apparatus or a separate remote controller, the controller 600 transmits the selected conversion function to the image processing apparatus 100 in which the selected conversion function is set. The image processing apparatus 100 corrects saturation of a color signal based on the set conversion function.

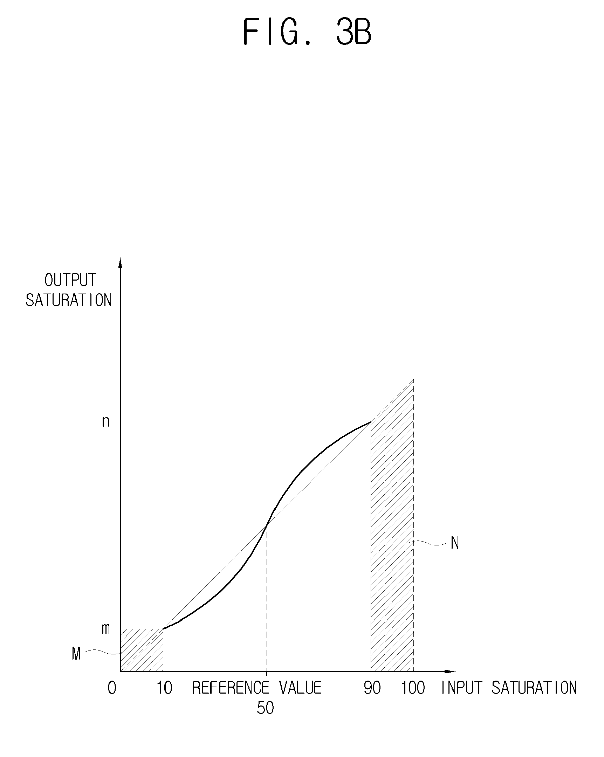

On the other hand, as shown in FIG. 3B, the image processing apparatus 100 may be configured not to correct saturation for a predetermined range of an input saturation.

For example, for an M section of 0 to 10 and an N section of 90 to 100 of the input saturation, the image processing apparatus 100 may be configured to output an output saturation having the same level as the input saturation, without correcting the input saturation using the conversion function.

In this case, sections where saturation is not corrected, such as the M section and the N section, may be set during manufacture of the display apparatus or may be set at a user's disposal.

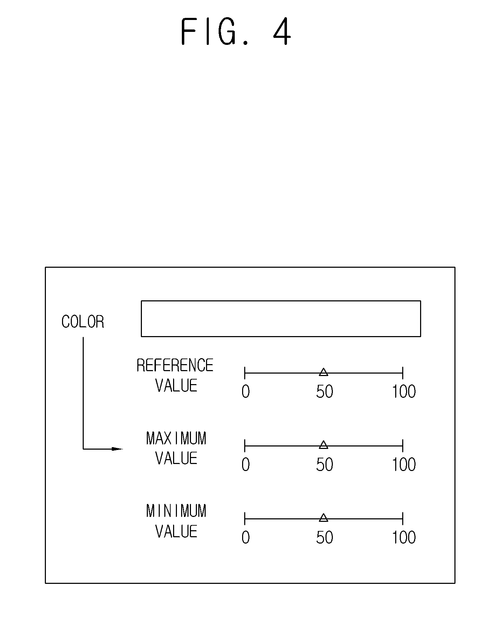

On the other hand, as shown in Fig. 4, the controller 600 generates a setup screen to allow a user to select a reference saturation of a conversion function set through the user input part 500 and a gradient of a corrected saturation for the input saturation and controls the signal processing part 300 to display the generated setup screen on the display part 400.

In this exemplary embodiment, if saturation of an RGB color of 255 is normalized to 100 in the image processing apparatus 100, the reference saturation is set to the midst saturation of 50 between 0 and 100.

In addition, the user may set the maximum saturation to increase pixels with saturation more than the reference saturation and the minimum saturation to decrease pixels with saturation less than the reference saturation through the setup screen. When the user selects the maximum saturation and the minimum saturation, a conversion function corresponding to the maximum saturation and the minimum saturation is set and stored in the storing part 700.

In this exemplary embodiment, the signal processing part 300 may generate a setup screen of a bar shape having values of 0 to 100 under control of the controller 600 and causes the generated setup screen as an OSD screen on the display part 400. In this case, a user may set the minimum saturation and the maximum saturation using a channel number and volume button (+/-) of a remote controller, or a button provided in the display apparatus.

On the other hand, the user may increase or decrease hue of a color signal through the user input part 500. For example, when the user increases the hue of the color signal, a conversion function moves in a positive direction with the same reference value.

Hereinafter, an operation of the image processing apparatus according to the exemplary embodiment of the present invention will be described with reference to the accompanying drawings.

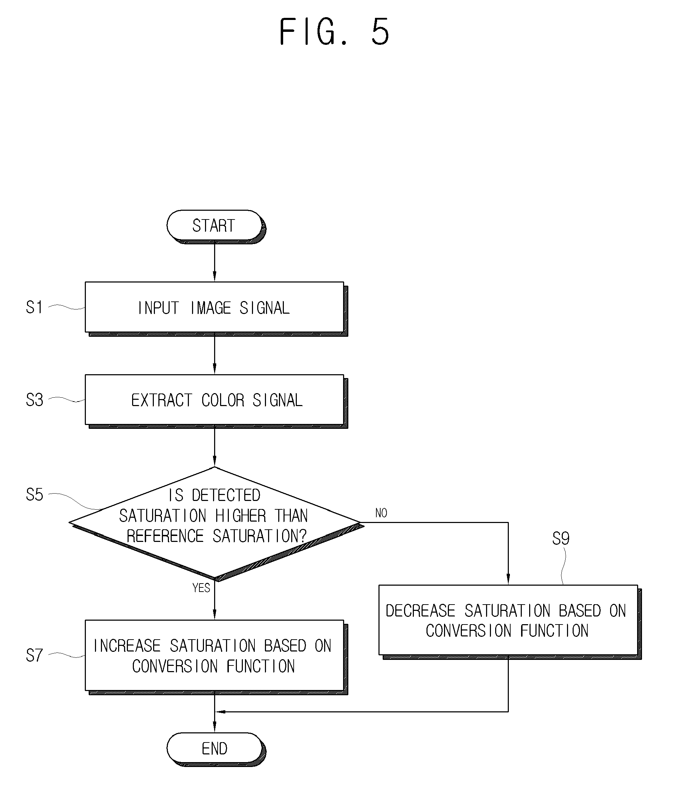

FIG. 5 is a flow chart illustrating an image processing method according to an exemplary embodiment of the present invention.

First, when an image signal is input at operation S1, the color extracting part 110 extracts a color signal from the input image signal at operation S3. At this time, an image signal, which is input externally, decoded and separated, or an image signal, which is processed in a scaler, may be input to the color extracting part 110.

Next, the converting part 120 compares an input saturation for each pixel with a predetermined reference saturation at operation S5. If the input saturation is more than the reference saturation, the converting part 120 increases the input saturation based on a preset conversion function at operation S7 to compensate the output saturation. On the contrary, if the input saturation is less than the reference saturation, the converting part 120 decreases the input saturation based on the preset conversion function at operation S9 to compensate the output saturation.

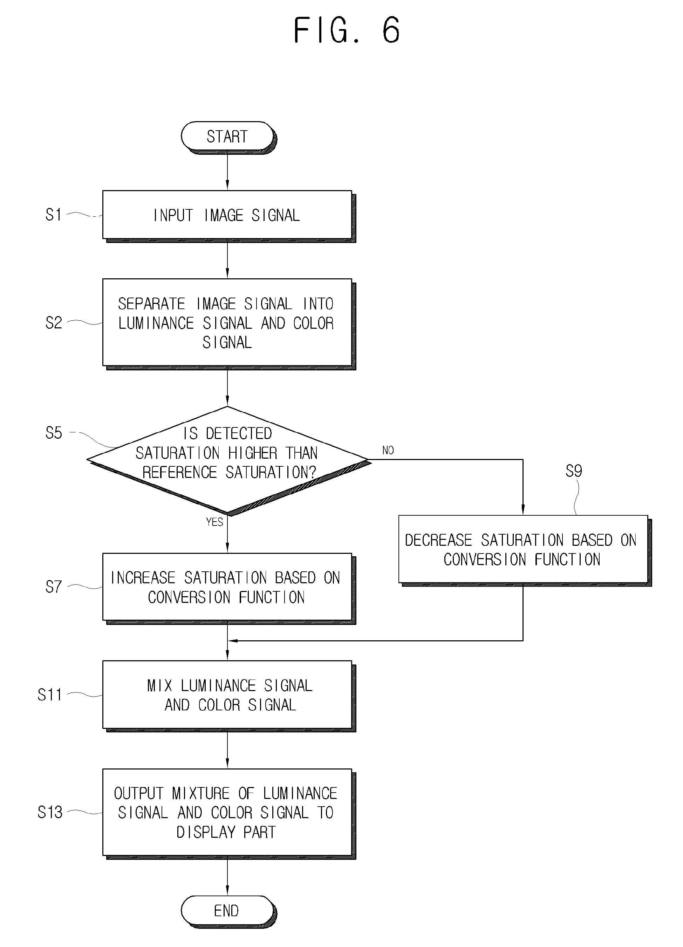

FIG. 6 is a flow chart illustrating an image processing method of the display apparatus according to the exemplary embodiment of the present invention.

First, when an image signal is input externally at operation S1, the image signal is separated into a luminance (Y) signal and a color (C) signal at operation S2, and an input saturation for each pixel of the color signal is compared with a reference saturation at operation S5. If the input saturation is more than the reference saturation, a specified value is added to the input saturation based on a preset conversion function at operation S7. On the contrary, if the input saturation is less than the reference saturation, a specified value is subtracted from the input saturation based on the preset conversion function at operation S9.

The color signal with the saturation corrected as above is mixed with the luminance signal at operation S11, and then a mixture of the color signal and the luminance signal is output to the display part 400 at operation S13.

Accordingly, even when a user increases or decreases color of an image signal to be output to the display part 400, it is possible to output an image signal with saturation corrected by decreasing low saturation by a specified value and increasing high saturation by a specified value in correspondence to the reference saturation.

As apparent from the above description, the present invention provides an image processing apparatus which is capable of decreasing noises included in a color signal having low gradation and increasing saturation of a color signal having high gradation by decreasing low saturation of the color signal and increasing high saturation of the color signal irrespective of a level of luminance, a display apparatus comprising the image processing apparatus and an image processing method.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. An image processing apparatus comprising:
a color extracting part that receives an image signal and extracts a color signal from the received image signal; and
a converting part that detects a saturation of a pixel of the color signal, determines whether the saturation of the pixel is higher or lower than a reference saturation, increases the saturation of the pixel based on a conversion function if the saturation of the pixel is higher than the reference saturation, and decreases the saturation of the pixel based on the conversion function if the saturation of the pixel is lower than the reference saturation.

2. The image processing apparatus according to claim 1, wherein the conversion function adds a specified value to the detected saturation of the pixel or subtracts a specified value from the detected saturation of the pixel.

3. A display apparatus that processes an image signal and displays an image on a display part, comprising:
an image processing apparatus that extracts a color signal from the image signal and detects a saturation of a pixel of the color signal, determines whether the saturation of the pixel is higher or lower than a reference saturation, increases the saturation of the pixel based on a conversion function if the saturation of the pixel is higher than the reference saturation, and decreases the saturation of the pixel based on the conversion function if the saturation of the pixel is lower than the reference saturation;
a signal processing part; and
a controller that controls the signal processing part to process and display the image signal.

4. The display apparatus according to claim 3, wherein the conversion function adds a specified value to the detected saturation of the pixel or subtracts a specified value from the detected saturation of the pixel.

5. The display apparatus according to claim 3, further comprising a storing part in which one or more conversion functions are stored.

6. The display apparatus according to claim 5, wherein the controller controls the signal processing part to generate a selection screen, which allows a user to select one of the conversion functions stored in the storing part, and display the generated selection screen on a separate display part.

7. The display apparatus according to claim 5, wherein the controller controls the signal processing part to generate a setup screen, which allows a user to set a conversion function reference saturation, a minimum value and a maximum value of the conversion function, which correspond to a minimum input saturation value to be decreased if the an input saturation value is lower than the set conversion function reference saturation and a maximum input saturation value to be increased if the input saturation value is higher than the set conversion function reference saturation, respectively, and display the generated setup screen on the display part.

8. The display apparatus according to claim 3, wherein the controller controls the signal processing part to generate a setup screen, which allows a user to select the reference saturation of the conversion function, and display the generated setup screen on the display part.

9. An image processing method comprising:
receiving an image signal and extracting a color signal from the received image signal;
detecting a saturation for a pixel of the color signal;
determining whether the saturation of the pixel is higher or lower than a reference saturation; and
varying the saturation of the pixel if the saturation is higher or lower than the reference saturation based on a conversion function.

10. The image processing method according to claim 9, wherein the varying the saturation of the pixel comprises increasing the saturation of the pixel based on the conversion function if the saturation of the pixel is higher than the reference saturation, and decreasing the saturation of the pixel based on the conversion function if the pixel of the pixel is lower than the reference saturation.

11. The image processing method according to claim 10, wherein the conversion function adds a specified value to the detected saturation of the pixel or subtracts a specified value from the detected saturation of the pixel.
